# EUROPÄISCHE PATENTSCHRIFT

(11) **EP 2 469 054 B1**
(45) Veröffentlichungstag und Bekanntmachung des Hinweises auf die Patenterteilung: **15.04.2015**
(21) Anmeldenummer: 11009894.4
(22) Anmeldetag: 15.12.2011
(51) Int. Cl.: F02B 21/00, B60K 6/12

(54) **Antrieb mit einer Brennkraftmaschine und einer Expansionsmaschine mit Gasrückführung**
Drive with a combustion engine and an expansion machine with gas recirculation
Entraînement doté d'un moteur à combustion interne et machine d'expansion équipée d'un retour de gaz

(30) Priorität: 24.12.2010 DE 102010056238
(43) Veröffentlichungstag der Anmeldung: 27.06.2012
(73) Patentinhaber: AUDI AG, 85045 Ingolstadt (DE)
(72) Erfinder: Reuss, Thomas, 74196 Neuenstadt (DE); Fessler, Marc, 74246 Eberstadt (DE); Dawidziak, Johannes, 97950 Grossrinderfeld (DE)
(74) Vertreter: Lehle, Josef

(56) Entgegenhaltungen:
- DE-A1- 19 600 910
- DE-A1-102007 033 693
- DE-A1-102007 059 145
- DE-A1-102008 008 723
- FR-A1- 2 831 609
- GB-A- 2 428 653

## Beschreibung

Die Erfindung betrifft einen Antrieb gemäß dem Oberbegriff der Ansprüche 1 und 2, insbesondere für ein Kraftfahrzeug, sowie ein Verfahren zum Betreiben eines Fahrzeugantriebs, insbesondere eines Kraftfahrzeugantriebs, gemäß dem Oberbegriff der Ansprüche 11 und 12.

Aus der Zeitschrift MTZ 01/2010 sowie aus dem NET-Journal Jahrgang Nr. 15, Heft 1/2, Januar/Februar 2010 ist ein von der ETH Zürich entwickelter Kraftfahrzeug-Hybridmotor mit einem Druckluft-Energiespeicher bekannt. Bei diesem Hybridmotor wird beim Bremsen des Kraftfahrzeugs Luft in den Brennkammern der Brennkraftmaschine verdichtet und diese Druckluft in einem Druckluft-Energiespeicher zwischengespeichert. Die Druckluft kann bei Bedarf, zum Beispiel beim Starten der Brennkraftmaschine, wieder aus dem Druckluft-Energiespeicher in die Brennräume der Brennkraftmaschine zugeführt werden, um die Brennkraftmaschine als Druckluft-Expansionsmaschine zu betreiben. Darüber hinaus kann die Druckluft auch zum Boosten der Brennkraftmaschine während der Kompression zusammen mit einer größeren Kraftstoffmenge in die Zylinder zugeführt werden.

Weitere Kraftfahrzeugantriebe dieser Art sind unter anderem bereits aus der WO 2004/106713 A1, aus der US 2006/0052930 A1 und aus der WO 2009/036992 A1 bekannt. Bei sämtlichen dieser Antriebe wird die Expansionsmaschine von der Brennkraftmaschine gebildet.

Aus der EP 1 308 614 B1 ist weiter bereits ein Antrieb und ein Verfahren der eingangs genannten Art bekannt, bei dem das verdichtete Gas aus dem Druckspeicher in einer Turbine eines Abgasturboladers der Brennkraftmaschine entspannt wird.

Darüber hinaus ist es aus der FR 2 836 181 A bei einem ähnlichen Antrieb ohne Expansionsmaschine (Fig. 1) bereits an sich bekannt, verdichtetes Gas aus einem Druckspeicher in einen Ansaugtrakt der Brennkraftmaschine zuzuführen.

Ausgehend hiervon liegt der Erfindung die Aufgabe zugrunde, einen Antrieb und ein Verfahren der eingangs genannten Art dahingehend zu verbessern, dass die im verdichteten Gas enthaltene Energie optimal ausgenutzt werden kann.

Diese Aufgabe wird bei dem erfindungsgemäßen Antrieb der Verfahren gelöst. Vorzugsweise weist die Brennkraftmaschine mehrere Zylinder bzw. Brennräume auf, in die das Gas aus der Expansionsmaschine abwechselnd zugeführt wird.

Der Erfindung liegt der Gedanke zugrunde, die Restenergie bzw. den Restdruck des durch die Expansionsmaschine hindurch geführten, nicht vollständig entspannten Gases auszunutzen, um dadurch in bestimmten Betriebszuständen die Aufladung der Brennkraftmaschine zu verbessern. Während in einem offenen System, wie in der EP 1 308 614 B1 beschrieben, das Gas nach dem Hindurchtritt durch die Expansionsmaschine in die Umgebung abgeführt wird, kann es durch die erfindungsgemäße Merkmalskombination einer weiteren Nutzung zugeführt werden.

Um die von der Expansionsmaschine verrichtete mechanische Arbeit zu maximieren, sieht eine besonders bevorzugte und für sich selbsttätig patentbegründende Ausgestaltung der Erfindung vor, dass der Antrieb Einrichtungen zur Aufheizung des verdichteten Gases vor seinem Eintritt in die Expansionsmaschine umfasst, um den Energieinhalt des Gases vor dem Hindurchtritt durch die Expansionsmaschine zu erhöhen. Bei den Einrichtungen zur Aufheizung des verdichteten Gases handelt es sich vorzugsweise um einen Wärmetauscher und ganz besonders bevorzugt um einen Abgaswärmetauscher, in dem das verdichtete Gas durch Wärmeübertragung aus dem Abgas der Brennkraftmaschine über die bei der Verdichtung erfolgende Erwärmung hinaus weiter aufgeheizt wird. Dadurch kann einerseits der Energieinhalt des verdichteten Gases und damit auch die in der Expansionsmaschine rekuperierbare Energiemenge vergrößert und andererseits zumindest ein Teil der im Abgas der Brennkraftmaschine enthaltenen Energie einer sinnvollen Nutzung zugeführt werden.

Die Expansionsmaschine kann einen einstufige Expansionsmaschine mit einer einzigen Druckstufe sein, kann jedoch auch mehrere hintereinander angeordnete Druckstufen aufweisen. Vorzugsweise umfasst die Expansionsmaschine mindestens eine Turbine, da diese zum einen eine relativ geringe Baugröße besitzt und zum anderen die im Druckgas gespeicherte Energie direkt in eine Rotationsbewegung umsetzen kann. Dies ist von besonderem Vorteil, wenn die Expansionsmaschine gemäß einer noch weiteren bevorzugten Ausgestaltung der Erfindung mit einem Generator zur Erzeugung von elektrischen Energie gekoppelt ist, da in diesem Fall durch die Rotation eines Turbinenrades der Turbine ein Rotor des Generators mit geringem Energieverlust angetrieben werden kann.

Der Generator wird vorteilhaft von einer Steuer- oder Regeleinrichtung gesteuert bzw. geregelt, die gleichzeitig auch die Zufuhr der aus der Expansionsmaschine austretenden, in die Brennräume und/oder in den Ansaugtrakt der Brennkraftmaschine zugeführten Gase steuert oder regelt. Dadurch kann die vom Generator abgegebene elektrische Leistung erhöht und, sofern sie von einem Bordnetz des Fahrzeugs nicht benötigt wird, in einer Fahrzeugbatterie gespeichert werden, wenn kein zusätzliches Druckgas oder nur eine geringe Menge an Druckgas für die Aufladung der Brennkraftmaschine benötigt wird. Umgekehrt kann die vom Generator abgegebene elektrische Leistung verringert werden, wenn zum Beispiel in bestimmten Betriebszuständen der Brennkraftmaschine, wie im unteren Drehzahlbereich zur Überwindung des so genannten Turbolochs oder im transienten Betrieb der Brennkraftmaschine, ein höherer Ladedruck zur Verfügung gestellt und dazu, in der Regel aus dem Druckgasspeicher, eine größere Menge Druckgas in die Brennräume bzw. in den Ansaugtrakt zugeführt werden soll.

Im Folgenden wird die Erfindung anhand von einigen in der Zeichnung dargestellten Ausführungsformen näher erläutert. Es zeigen
Fig. 1 eine schematische Darstellung eines nicht erfindungsgemäßen Antriebs für ein Kraftfahrzeug, bei dem ganz oder teilweise entspanntes Gas aus einer separaten Expansionsmaschine hinter einem Verdichter eines Abgasturboladers in einen Ansaugtrakt einer Brennkraftmaschine zugeführt wird;
Fig. 2 eine Darstellung entsprechend Fig. 1, wobei jedoch das Gas aus der Expansionsmaschine vor dem Verdichter des Abgasturboladers in den Ansaugtrakt zugeführt wird;
Fig. 3 eine Darstellung entsprechend Fig. 1 und 2, wobei jedoch das Gas aus der Expansionsmaschine hinter einem Luftfilter in den Ansaugtrakt zugeführt wird;
Fig. 4 eine Darstellung entsprechend Fig. 1, wobei jedoch das Gas aus der Expansionsmaschine direkt in die Brennräume der Brennkraftmaschine zugeführt wird;
Fig. 5 eine schematische Darstellung eines weiteren nicht erfindungsgemäßen Antriebs für ein Kraftfahrzeug;
Fig. 6 eine Darstellung entsprechend Fig. 5, wobei erfindungsgemäß verdichtetes Gas aus den Brennräumen der Brennkraftmaschine direkt in die Expansionsmaschine zugeführt werden kann;
Fig. 7 eine Darstellung entsprechend Fig. 6, wobei jedoch das verdichtete Gas aus den Brennräumen der Brennkraftmaschine vor seiner Zufuhr in die Expansionsmaschine weiter aufgeheizt werden kann.

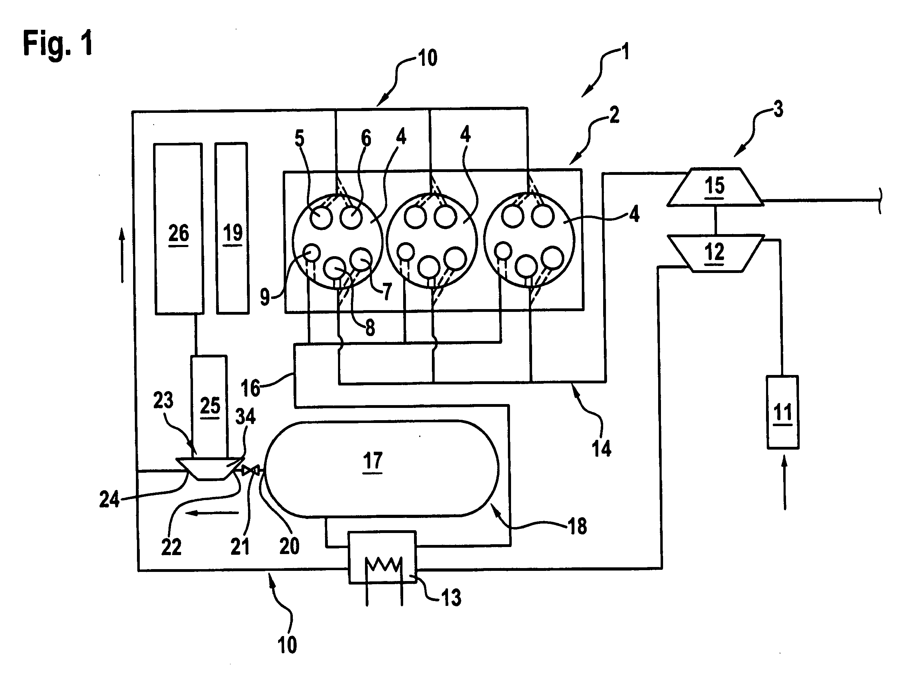

Der in Fig. 1 schematisch dargestellte Antrieb 1 für ein Kraftfahrzeug umfasst eine Brennkraftmaschine 2 mit einem Abgasturbolader 3. Zur Vereinfachung sind nur drei Zylinder 4 der Brennkraftmaschine 2 dargestellt, von denen jeder in bekannter Weise zusammen mit einem Zylinderkopf und einem Kolben (nicht dargestellt) einen Brennraum begrenzt, in den ein Kraftstoff zugeführt werden kann. Der Zylinderkopf weist über jedem Zylinder zwei mit Einlassventilen versehene Einlasskanäle 5, 6 und drei mit Auslassventilen versehene Auslasskanäle 7, 8, 9 auf. Die Einlasskanäle 5 und 6 jedes Zylinders 4 sind mit einem Ansaugtrakt 10 der Brennkraftmaschine 2 verbunden, der einen Luftfilter 11, einen Verdichter 12 des Abgasturboladers 3 und einen Ladeluftkühler 13 umfasst. Die Auslasskanäle 7 und 8 jedes Zylinders 4 sind mit einem Abgastrakt 14 der Brennkraftmaschine 2 verbunden, der eine Turbine 15 des Abgasturboladers 3 umfasst. Der zusätzliche Auslasskanal 9 jedes Zylinders 4 ist nicht mit dem Abgastrakt 14 sondern durch eine Sammelleitung 16 mit einem Speicherbehälter 17 eines Druckgasspeichers 18 verbunden. Die zusätzlichen Auslasskanäle 9 der Zylinder 4 und die Sammelleitung 16 dienen dazu, während einer Brems- oder Schubphase der Brennkraftmaschine 2 bei unterbrochener Kraftstoffzufuhr in die Zylinder 4 zugeführte und bei der Kompression in den Zylindern 4 verdichtete Verbrennungsluft aus den Zylindern 4 zur Zwischenspeicherung in den Druckgasspeicher 18 zuzuführen, aus dem sie bei Bedarf wieder entnommen werden kann.

Die Zufuhr der verdichteten Verbrennungsluft aus jedem Zylinder 4 in den Druckgasspeicher 18 erfolgt jeweils während des Kompressionstaktes, indem in der Nähe des oberen Totpunkts des Kolbens das Auslassventil in dem zusätzlichen Auslasskanal 9 des Zylinders 4 geöffnet wird. Die Steuerung der Öffnungszeiten der Auslassventile der zusätzlichen Auslasskanäle 9 erfolgt durch ein Motorsteuergerät 19 der Brennkraftmaschine 2. Mögliche Vorgehensweisen für die Steuerung der Auslassventile der zusätzlichen Auslasskanäle sind in den eingangs genannten Druckschriften erläutert, so dass hier nicht näher darauf eingegangen werden soll.

Infolge der Entnahme von verdichteter Verbrennungsluft aus einem Zylinder 4 wird aufgrund der fehlenden Luftmasse und des reduzierten Druckniveaus bei dem auf den Kompressionstakt folgenden Expansionstakt des Zylinders 4 in diesem eine größere Schlepparbeit verrichtet. Somit arbeitet die Brennkraftmaschine 2 als Kältemaschine, während in der Brems- oder Schubphase verdichtete Verbrennungsluft aus den Zylindern 4 in den Druckgasspeicher 18 zugeführt und dort zwischengespeichert wird. Dies wiederum führt zu einer erhöhten Bremswirkung der als Motorbremse arbeitenden Brennkraftmaschine 2.

Um bei einer durch die Auslegung des Druckgasspeichers 18 vorgegebenen maximalen Druckfestigkeit des Speicherbehälters 17 die Menge der darin gespeicherten verdichteten Verbrennungsluft zu maximieren, enthält die Sammelleitung 16 vor dem Druckgasspeicher 18 einen Wärmetauscher zur Abkühlung der verdichteten Verbrennungsluft, bei dem es sich vorzugsweise um den Ladeluftkühler 13 handelt.

Wenn die Brennkraftmaschine 2 mit einer Abgasrückführung (nicht dargestellt) versehen ist, kann an Stelle von Verbrennungsluft auch Abgas oder ein Abgas/Luft-Gemisch in den Zylindern 4 verdichtet und in den Druckgasspeicher 18 zugeführt werden.

Die im Druckgasspeicher 18 zwischengespeicherte verdichtete Verbrennungsluft kann bei dem erfindungsgemäßen Antrieb 1 zu zwei verschiedenen Zwecken verwendet werden: Zum einen kann die verdichtete Verbrennungsluft unter Verrichtung von mechanischer Arbeit ganz oder teilweise entspannt werden. Zum anderen kann die Verbrennungsluft in teilweise entspanntem Zustand als Ladeluft in den Ansaugtrakt 10 der Brennkraftmaschine 2 zugeführt werden, zum Beispiel um den Ladedruck in transienten Betriebszuständen kurzzeitig zu erhöhen.

Zu dem zuerst genannten Zweck ist ein Auslass 20 des Druckgasspeichers 18 über ein Ventil 21 mit steuerbarem Strömungsquerschnitt mit einem Einlass 22 einer Expansionsmaschine 23 verbunden, deren Auslass 24 zu dem zuletzt genannten Zweck mit dem Ansaugtrakt 10 verbunden ist. Die Expansionsmaschine 23 wird von einer Turbine 34 gebildet, deren Turbinenrad bei geöffnetem Ventil 21 von der aus dem Druckgasspeicher 18 ausströmenden Verbrennungsluft in Drehung versetzt wird. Die Welle des Turbinerades ist mit dem Rotor eines Generators 25 gekoppelt, so dass der Generator 25 elektrische Energie erzeugen und diese in eine Fahrzeugbatterie 26 bzw. in das Bordnetz (nicht dargestellt) des Kraftfahrzeugs einspeisen kann, wenn die Expansionsmaschine 23 von der Verbrennungsluft aus dem Druckgasspeicher 18 durchströmt wird.

Das steuerbare Ventil 21 hinter dem Auslass 20 des Druckgasspeichers 18 und der Generator 25 werden vom Motorsteuergerät 19 der Brennkraftmaschine 2 angesteuert, und zwar zum einen in Abhängigkeit von der gewünschten Menge und dem gewünschten Druck der Verbrennungsluft, die in den Ansaugtrakt 10 zugeführt werden soll, und zum anderen von der Menge der elektrischen Energie, die vom Generator erzeugt werden soll. Beispielsweise kann das Ventil 21 weit geöffnet und die Turbine 34 und der Generator 25 im Leerlauf betrieben werden, wenn eine große Menge Druckluft mit einem hohen Druck in den Ansaugtrakt 10 zugeführt werden soll. Um die Menge der in den Ansaugtrakt 10 zugeführten Luft zu reduzieren, kann der Strömungsquerschnitt des Ventils 21 verkleinert werden. Um sowohl den Druck als auch die Menge der in den Ansaugtrakt 10 zugeführten Luft zu reduzieren, kann die Last des Generators 25 und damit der Strömungswiderstand der Turbine erhöht werden, wodurch der Anteil der im Generator 25 in elektrische Leistung umgesetzten Druckluftenergie zunimmt. Wenn dabei der Strömungsquerschnitt des Ventils 21 vergrößert wird, kann der Druck der in den Ansaugtrakt 10 zugeführten Luft ohne Verringerung der Luftmenge verkleinert werden. Wenn nur elektrische Energie erzeugt werden soll, kann der Druck durch entsprechende Erhöhung der Last im Wesentlichen bis auf Atmosphärendruck reduziert werden. Auf diese Weise kann der Energieinhalt der gespeicherten Druckluft für beide Zwecke optimal ausgenutzt werden.

Ggf. kann zwischen dem Einlass 22 und dem Auslass 24 der Expansionsmaschine 23 eine Bypassleitung (nicht dargestellt) vorgesehen sein, durch welche die Verbrennungsluft aus dem Druckgasspeicher an der Expansionsmaschine 23 vorbei in den Ansaugtrakt 10 zugeführt werden kann, um Leistungsverluste zu vermeiden, wenn vom Bordnetz oder zur Aufladung der Fahrzeugbatterie 26 keine elektrische Energie angefordert wird.

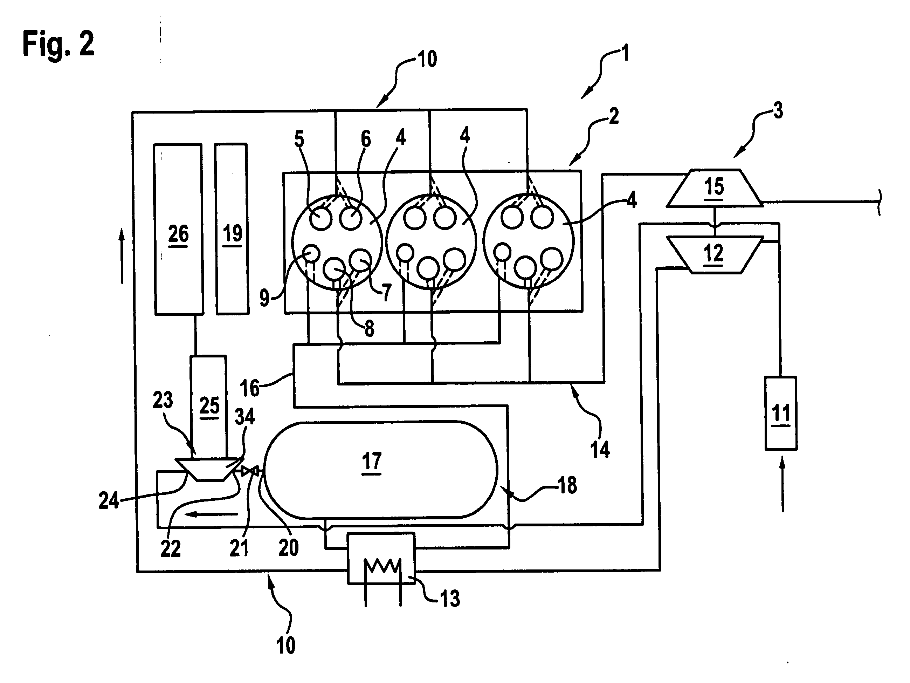

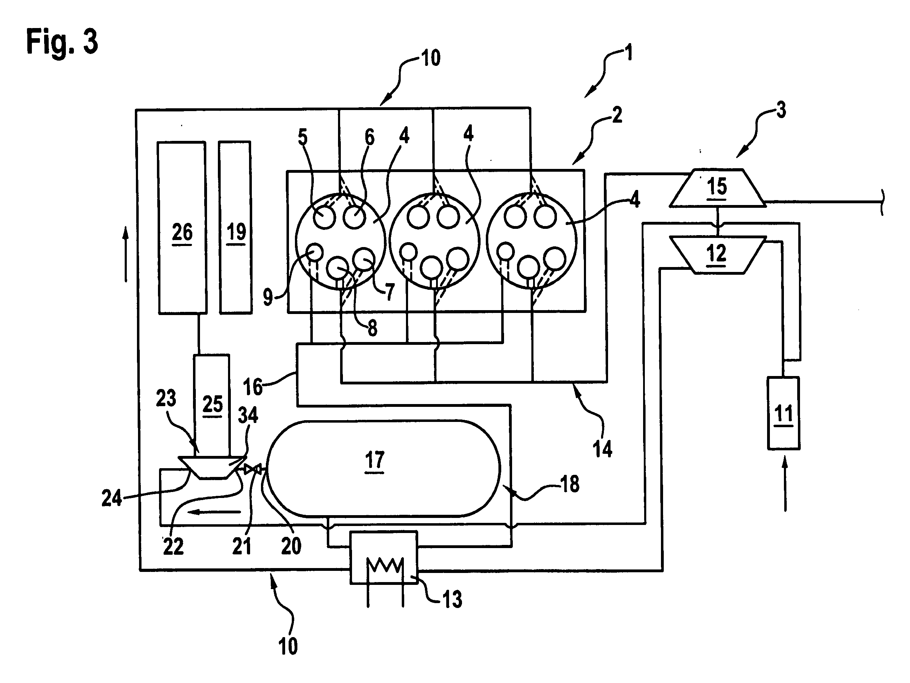

Der Antrieb 1 in Fig. 2 unterscheidet sich von dem Antrieb 1 in Fig. 1 dadurch, dass die aus der Expansionsmaschine 23 austretende Verbrennungsluft vor dem Verdichter 12 des Abgasturboladers 3 in den Ansaugtrakt 10 zugeführt wird, während die Verbrennungsluft aus der Expansionsmaschine 23 bei dem Antrieb in Fig. 3 hinter dem Luftfilter 11 in den Ansaugtrakt 10 zugeführt wird. -

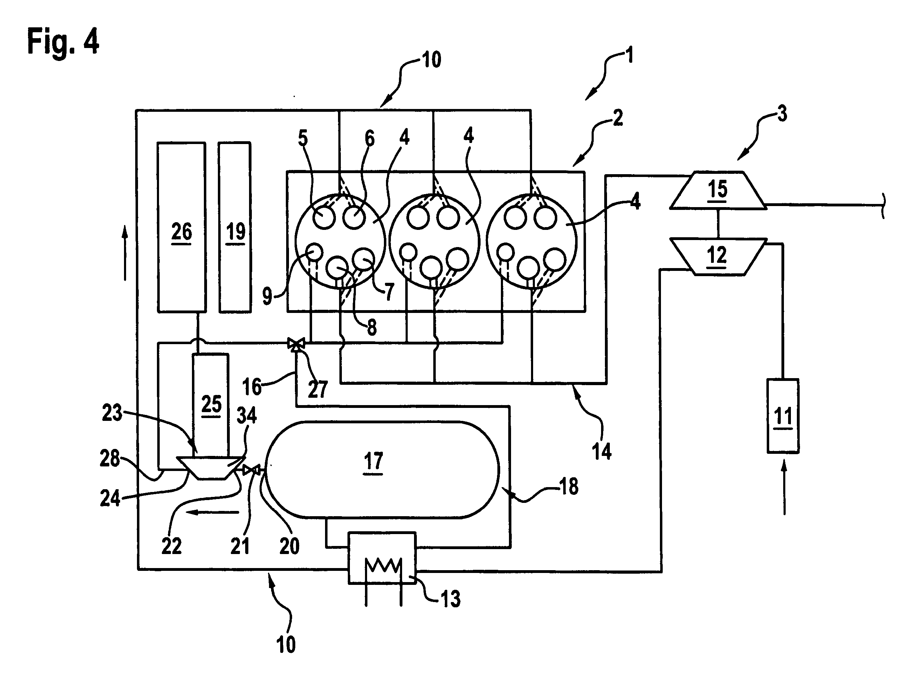

Bei dem Antrieb in Fig. 4 wird hingegen die Verbrennungsluft aus der Expansionsmaschine 23 ohne den Umweg über den Ansaugtrakt 10 direkt in die Brennräume der Brennkraftmaschine 2 zugeführt. Zu diesem Zweck ist dort die Sammelleitung 16 mit einem Drei-Wege-Ventil 27 versehen, das über eine Leitung 28 mit dem Auslass 24 der Expansionsmaschine 23 verbunden ist, so dass die durch die Expansionsmaschine 23 geströmte Verbrennungsluft durch die Sammelleitung 16 und die Auslasskanäle 9 in die Brennräume geleitet werden kann.

Die direkte Zufuhr der Verbrennungsluft aus dem Druckgasspeicher 18 in die Brennräume kann dazu dienen, die Brennkraftmaschine 2 im Direktstart ohne Anlasser mit Hilfe der Druckluft zu starten oder einen reinen Druckluftbetrieb der Brennkraftmaschine 2 ohne Zufuhr von Kraftstoff in die Brennräume zu implementieren. In beiden Fällen wird die verdichtete Luft aus dem Druckgasspeicher 18 vorzugsweise ohne eine wesentliche Entspannung in der Expansionsmaschine 23 bzw. durch die Bypassleitung zwischen dem Einlass 22 und dem Auslass 24 der Expansionsmaschine 23 unter hohem Druck in die Brennräume zugeführt, wobei die Zufuhr durch Öffnen und Schließen der Auslassventile in den Auslasskanälen 9 vom Motorsteuergerät 19 gesteuert wird. Die direkte Zufuhr der Verbrennungsluft in die Brennräume kann auch zur Beschleunigung des Kraftfahrzeugs dienen, indem im motorischen Betrieb der Brennkraftmaschine 2 nicht nur Druckluft in die Brennräume zugeführt, sondern zugleich auch die Menge des in die Brennräume zugeführten Kraftstoffs vergrößert wird, um dadurch die Antriebsleistung der Brennkraftmaschine 2 durch "Boosten" zu steigern.

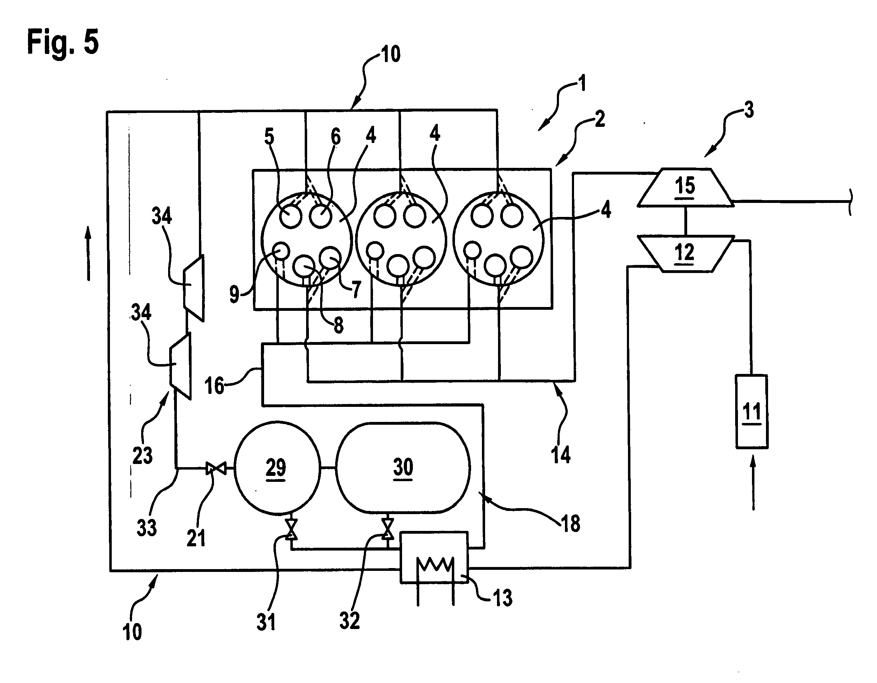

Der Antrieb 1 in Fig. 5 unterscheidet sich von den zuvor beschriebenen Antrieben 1 zum einen dadurch, dass an Stelle eines einstufigen Druckgasspeichers 18 ein zweistufiger Druckgasspeicher 18 mit zwei Speicherbehältern 29, 30 vorgesehen ist. Beide Speicherbehälter 29, 30 sind jeweils durch getrennte, mit steuerbaren Absperrventilen 31, 32 bestückte Speiseleitungen mit der Sammelleitung 16 verbunden, so dass durch eine geeignete Ansteuerung der Absperrventile 31, 32 und der Auslassventile in den Auslasskanälen 9 einer der beiden Speicherbehälter 29, 30 mit einem höheren und der andere mit einem niedrigeren Druck beaufschlagt werden kann. Die beiden Speicherbehälter 29, 30 sind dort durch eine einzige Leitung 33 mit einem steuerbaren Ventil 21 mit der Expansionsmaschine 23 verbunden, die bei dem Antrieb in Fig. 5 als zweistufige Expansionsmaschine 23 ausgebildet ist und zwei in Reihe geschaltete Turbinen 34 umfasst.

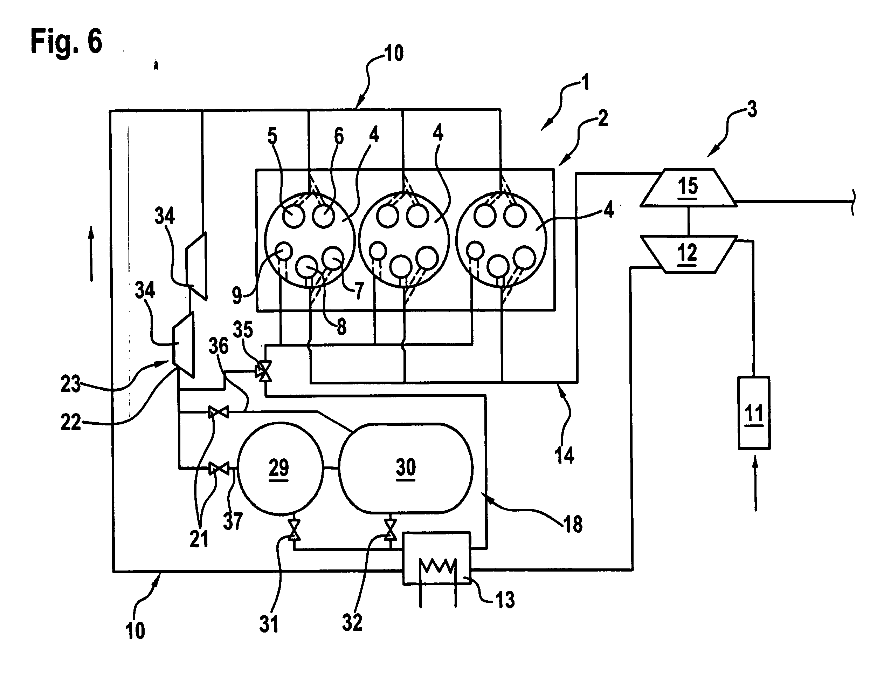

Bei dem Antrieb in Fig. 6 kann erfindungsgemäß darüber hinaus die Sammelleitung 16 über ein Drei-Wege-Ventil 35 wahlweise mit dem Druckgasspeicher 18 oder direkt mit dem Einlass 22 der Expansionsmaschine 23 verbunden werden, um diese zur Erzeugung von elektrischer Energie durch die Auslasskanäle 9 und die Sammelleitung 16 direkt, das heißt ohne vorherige Zwischenspeicherung im Druckgasspeicher 18, aus den Brennräumen der Zylinder 4 mit verdichteter Luft zu beaufschlagen. Die beiden Speicherbehälter 29, 30 des Druckgasspeichers 18 sind hier zudem durch eine zwei getrennte, mit steuerbaren Ventilen 21 bestückte Leitungen 36, 37 mit der Expansionsmaschine 23 verbunden, so dass diese wahlweise mit Verbrennungsluft unter höherem Druck bzw. unter niedrigerem Druck beaufschlagt werden kann, je nachdem wie viel elektrische Energie vom Bordnetz oder zur Aufladung der Fahrzeugbatterie 26 angefordert wird.

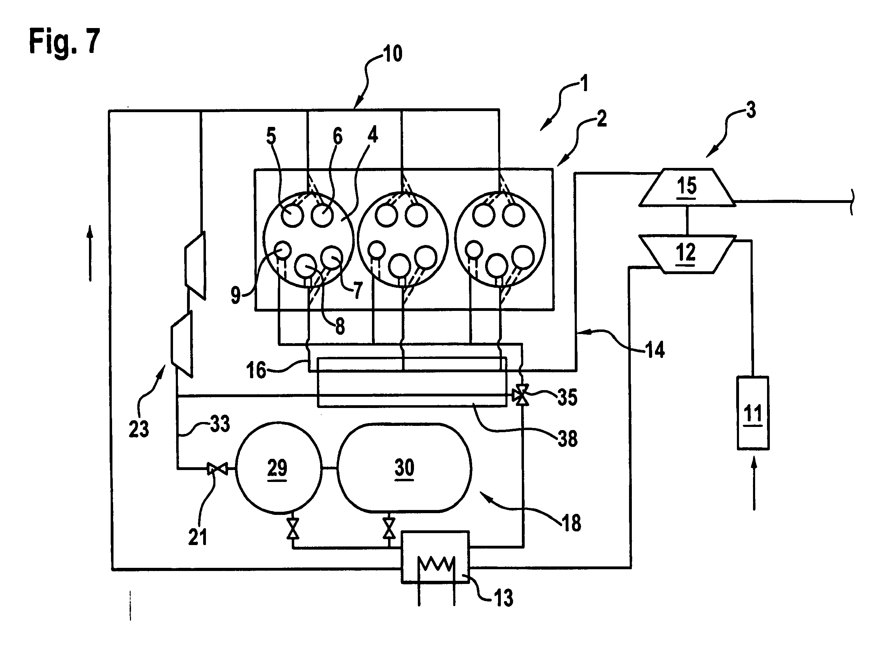

Auch bei dem Antrieb in Fig. 7 kann die Sammelleitung 16 über ein Drei-Wege-Ventil 35 wahlweise mit dem Druckgasspeicher 18 oder direkt mit der Expansionsmaschine 23 verbunden werden, wobei jedoch zusätzlich zwischen dem Drei-Wege-Ventil 35 und der Expansionsmaschine 23 ein vom Abgas und von der Druckluft durchströmter Abgaswärmetauscher 38 angeordnet ist, um die Temperatur der verdichteten Luft vor deren Zufuhr in die Expansionsmaschine 23 anzuheben und dadurch die Leistung der Expansionsmaschine 23 maßgeblich zu erhöhen. Auf diese Weise kann darüber hinaus ein Teil der ansonsten nicht nutzbaren Abgasenergie der Brennkraftmaschine 2 in einem offenen Kreisprozess genutzt werden. Im Vergleich zu einem geschlossenen Dampfkreisprozess ergibt sich dadurch ein wesentlicher Vorteil, da die im Abgaswärmetauscher 38 aufgeheizte verdichtete Verbrennungsluft nach ihrer Entspannung in der Expansionsmaschine 23 als Verbrennungsluft für die Verbrennung in der Brennkraftmaschine 2 genutzt werden kann. Im Unterschied zu einem geschlossenen Dampfkreisprozess wird hier kein Kondensator benötigt, wodurch sich neben einer Einsparung von Komponenten auch eine Bauraumverkleinerung ergibt.

Auch zwischen dem Druckgasspeicher 18 und der Expansionsmaschine 23 kann ein vom Abgas und von der Verbrennungsluft durchströmter Abgaswärmetauscher (nicht dargestellt) angeordnet sein, um die Temperatur der verdichteten Luft aus dem Druckgasspeicher 18 vor ihrer Zufuhr in die Expansionsmaschine 23 anzuheben und dadurch die Leistung der Expansionsmaschine 23 zu erhöhen.

### BEZUGSZEICHENLISTE

- 1: Antrieb
- 2: Brennkraftmaschine
- 3: Abgasturbolader
- 4: Zylinder
- 5: Einlasskanal
- 6: Einlasskanal
- 7: Auslasskanal
- 8: Auslasskanal
- 9: Auslasskanal
- 10: Ansaugtrakt
- 11: Luftfilter
- 12: Verdichter Abgasturbolader
- 13: Ladeluftkühler
- 14: Abgastrakt
- 15: Turbine Abgasturbolader
- 16: Sammelleitung
- 17: Speicherbehälter
- 18: Druckgasspeicher
- 19: Motorsteuergerät
- 20: Auslass Druckgasspeicher
- 21: steuerbares Ventil
- 22: Einlass Expansionsmaschine
- 23: Expansionsmaschine
- 24: Auslass Expansionsmaschine
- 25: Generator
- 26: Fahrzeugbatterie
- 27: Drei-Wege-Ventil
- 28: Leitung
- 29: Speicherbehälter
- 30: Speicherbehälter
- 31: Absperrventil
- 32: Absperrventil
- 33: Leitung
- 34: Turbine
- 35: Drei-Wege-Ventil
- 36: Leitung
- 37: Leitung
- 38: Abgaswärmetauscher

## Patentansprüche

1. Antrieb (1) für ein Fahrzeug, insbesondere für ein Kraftfahrzeug, mit einer Brennkraftmaschine (2), die mindestens einen von einem Zylinder (4) und einem Kolben begrenzten Brennraum besitzt, mindestens einem mit dem Brennraum verbindbaren Druckgasspeicher (18) zur Speicherung eines im Brennraum verdichteten Gases und einer separaten Expansionsmaschine (23) zur Entspannung von verdichtetem Gas aus dem Brennraum oder aus dem Druckgasspeicher (18) unter Verrichtung von mechanischer Arbeit, **gekennzeichnet durch** Einrichtungen zur Zufuhr von Gas aus der Expansionsmaschine (23) in den Brennraum oder in einen Ansaugtrakt (10) der Brennkraftmaschine (2), wobei ein zusätzlicher Auslasskanal (9) jedes Zylinders (4) nicht mit einem Abgastrakt (14) der Brennkraftmaschine (2), sondern über eine Sammelleitung (16) und ein Drei-Wege-Ventil (35) wahlweise mit einem Speicherbehälter (17) eines Druckgasspeichers (18) oder direkt mit einem Einlass (22) der Expansionsmaschine (23) verbunden ist.

2. Antrieb nach Anspruch 1, **gekennzeichnet durch** Einrichtungen (38) zur Aufheizung des verdichteten Gases aus dem Brennraum oder aus dem Druckgasspeicher (18) vor dem Eintritt in die Expansionsmaschine (23).

3. Antrieb nach Anspruch 2, **dadurch gekennzeichnet, dass** die Einrichtungen einen Wärmetauscher und vorzugsweise einen Abgaswärmetauscher (38) umfassen.

4. Antrieb nach einem der vorangehenden Ansprüche, **dadurch gekennzeichnet, dass** die Expansionsmaschine (23) mindestens eine Druckstufe aufweist.

5. Antrieb nach einem der vorangehenden Ansprüche, **dadurch gekennzeichnet, dass** die Expansionsmaschine (23) mindestens eine Turbine (34) umfasst.

6. Antrieb nach einem der vorangehenden Ansprüche, **dadurch gekennzeichnet, dass** die Expansionsmaschine (23) mit einem elektrischen Generator (25) gekoppelt ist, um die in der Expansionsmaschine (23) verrichtete mechanische Arbeit in elektrische Energie umzuwandeln.

7. Antrieb nach einem der vorangehenden Ansprüche, **gekennzeichnet durch** eine Steuer- oder Regeleinrichtung (19) zur Steuerung oder Regelung der von der Expansionsmaschine verrichteten mechanischen Arbeit oder der daraus erzeugten elektrischen Energie sowie zur Steuerung oder Regelung der Menge und/oder des Drucks der aus der Expansionsmaschine (23) in den Brennraum oder in einen Ansaugtrakt (10) der Brennkraftmaschine (2) zugeführten Gase.

8. Antrieb nach einem der vorangehenden Ansprüche, **dadurch gekennzeichnet, dass** der Druckgasspeicher (18) ein ein- oder mehrstufiger Druckgasspeicher mit einem oder mehreren Speicherbehältern (17; 29, 30) ist.

9. Antrieb nach einem der vorangehenden Ansprüche, **gekennzeichnet durch** eine Steuer- oder Regeleinrichtung (19, 21, 31, 32) zur Steuerung bzw. Regelung der Befüllung und Entleerung des Druckgasspeichers (18).

10. Antrieb nach einem der vorangehenden Ansprüche, **gekennzeichnet durch** Mittel (27, 35) zum direkten Verbinden der Expansionsmaschine (23) mit dem Brennraum der Brennkraftmaschine (2) unter Umgehung des Druckgasspeichers (18).

11. Verfahren zum Betreiben eines Fahrzeugantriebs, insbesondere eines Kraftfahrzeugantriebs, mit einer Brennkraftmaschine (2), einem mit mindestens einem Brennraum der Brennkraftmaschine (2) verbindbaren Druckgasspeicher (18) sowie einer separaten Expansionsmaschine (23), wobei ein im Brennraum der Brennkraftmaschine (2) verdichtetes Gas unter Verrichtung von Arbeit in der Expansionsmaschine (23) entspannt wird, **dadurch gekennzeichnet, dass** mindestens ein Teil des Gases aus der Expansionsmaschine (23) in den Brennraum oder in einen Ansaugtrakt (10) der Brennkraftmaschine (2) zugeführt wird, wobei ein zusätzlicher Auslasskanal (9) jedes Zylinders (4) nicht mit einem Abgastrakt (14) der Brennkraftmaschine (2), sondern über eine Sammelleitung (16) und ein Drei-Wege-Ventil (35) wahlweise mit einem Speicherbehälter (17) eines Druckgasspeichers (18) oder direkt mit einem Einlass (22) der Expansionsmaschine (23) verbunden ist.

12. Verfahren nach Anspruch 11, **dadurch gekennzeichnet, dass** das verdichtete Gas aus dem Brennraum oder aus dem Druckgasspeicher (18) vor dem Eintritt in die Expansionsmaschine (23) aufgeheizt wird.

## Claims

1. Drive (1) for a vehicle, more particularly for a motor vehicle, comprising an internal combustion engine (2) having at least one combustion chamber delimited by a cylinder (4) and a piston, at least one compressed gas accumulator (18) which is connectable to the combustion chamber and is intended for storing a gas compressed in the combustion chamber, and a separate expansion machine (23) for expanding compressed gas, which originates from the combustion chamber or from the compressed gas accumulator (18), by performing mechanical work, **characterised by** devices for supplying gas from the expansion machine (23) to the combustion chamber or to an intake conduit (10) of the internal combustion engine (2), an additional outlet duct (9) of each cylinder (4) being connected, by means of a manifold (16) and a three-way valve (35), either to an accumulator tank (17) of a compressed gas accumulator (18) or directly to an inlet (22) of the expansion machine (23), rather than to an exhaust conduit (14) of the internal combustion engine (2).

2. Drive according to claim 1, **characterised by** devices (38) for heating the compressed gas originating from the combustion chamber or from the compressed gas accumulator (18) before said gas enters the expansion machine (23).

3. Drive according to claim 2, **characterised in that** the devices comprise a heat exchanger and preferably an exhaust heat exchanger (38).

4. Drive according to any of the preceding claims, **characterised in that** the expansion machine (23) comprises at least one pressure stage.

5. Drive according to any of the preceding claims, **characterised in that** the expansion machine (23) comprises at least one turbine (34).

6. Drive according to any of the preceding claims, **characterised in that** the expansion machine (23) is coupled to an electrical generator (25) in order to convert the mechanical work carried out in the expansion machine (23) into electrical energy.

7. Drive according to any of the preceding claims, **characterised by** an open- or closed-loop control device (19) for the open- or closed-loop control of the mechanical work carried out by the expansion machine or of the electrical energy generated from said work, and for the open- or closed-loop control of the amount and/or the pressure of the gases supplied from the expansion machine (23) to the combustion chamber or to an intake conduit (10) of the internal combustion engine (2).

8. Drive according to any of the preceding claims, **characterised in that** the compressed gas accumulator (18) is a single-stage or multistage compressed gas accumulator comprising one or more accumulator tanks (17; 29, 30).

9. Drive according to any of the preceding claims, **characterised by** an open- or closed-loop control device (19, 21, 31, 32) for the open- or closed-loop control of filling and emptying the compressed gas accumulator (18).

10. Drive according to any of the preceding claims, **characterised by** means (27, 35) for directly connecting, by bypassing the compressed gas accumulator (18), the expansion machine (23) to the combustion chamber of the internal combustion engine (2).

11. Method for operating a vehicle drive, in particular a motor vehicle drive, having an internal combustion engine (2), a compressed gas accumulator (18) connectable to at least one combustion chamber of the internal combustion engine (2), and a separate expansion machine (23), a gas compressed in the combustion chamber of the internal combustion engine (2) being expanded as a result of work being carried out in the expansion machine (23), **characterised in that** at least some of the gas originating from the expansion machine (23) is supplied to the combustion chamber or to an intake conduit (10) of the internal combustion engine (2), an additional outlet duct (9) of each cylinder (4) being connected, by means of a manifold (16) and a three-way valve (35), either to an accumulator tank (17) of a compressed gas accumulator (18) or directly to an inlet (22) of the expansion machine (23), rather than to an exhaust conduit (14) of the internal combustion engine (2).

12. Method according to claim 11, **characterised in that** the compressed gas from the combustion chamber or from the compressed gas accumulator (18) is heated before entering the expansion machine (23).

## Revendications

1. Entraînement (1) pour un véhicule, en particulier un véhicule automobile, comprenant un moteur à combustion interne (2), qui possède au moins un espace de combustion délimité par un cylindre (4) et un piston, au moins un accumulateur de gaz comprimé (18) qui peut être raccordé à l'espace de combustion pour accumuler un gaz comprimé dans l'espace de combustion et une machine d'expansion séparée (23) pour détendre le gaz comprimé de l'espace de combustion ou de l'accumulateur de gaz comprimé (18) en effectuant un travail mécanique, **caractérisé par** des dispositifs d'acheminement de gaz de la machine d'expansion (23) dans l'espace de combustion ou dans un conduit d'admission (10) du moteur à combustion interne (2), dans lequel un canal de décharge supplémentaire (9) de chaque cylindre (4) n'est pas relié à un conduit d'échappement (14) du moteur à combustion interne (2), mais via un collecteur (16) et une soupape à trois voies (35), au choix, à un récipient d'accumulation (17) d'un accumulateur de gaz comprimé (18) ou directement à une admission (22) de la machine d'expansion (23).

2. Entraînement selon la revendication 1, **caractérisé par** des dispositifs (38) pour chauffer le gaz comprimé de l'espace de combustion ou de l'accumulateur de gaz comprimé (18) avant l'entrée dans la machine d'expansion (23).

3. Entraînement selon la revendication 2, **caractérisé en ce que** les dispositifs comprennent un échangeur de chaleur et, de préférence, un échangeur de chaleur de gaz d'échappement (38).

4. Entraînement selon l'une quelconque des revendications précédentes, **caractérisé en ce que** la machine d'expansion (23) présente au moins un étage de pression.

5. Entraînement selon l'une quelconque des revendications précédentes, **caractérisé en ce que** la machine d'expansion (23) comprend au moins une turbine (34).

6. Entraînement selon l'une quelconque des revendications précédentes, **caractérisé en ce que** la machine d'expansion (23) est couplée à un générateur électrique (25) pour convertir le travail mécanique effectué dans la machine d'expansion (23) en énergie électrique.

7. Entraînement selon l'une quelconque des revendications précédentes, **caractérisé par** un dispositif de commande ou de réglage (19) pour commander ou régler le travail mécanique effectué par la machine d'expansion ou l'énergie électrique qui en est dérivée ainsi que pour commander ou régler la quantité et/ou la pression des gaz acheminés de la machine d'expansion (23) dans l'espace de combustion ou dans un conduit d'admission (10) du moteur à combustion interne (2).

8. Entraînement selon l'une quelconque des revendications précédentes, **caractérisé en ce que** l'accumulateur de gaz comprimé (18) est un accumulateur de gaz comprimé à un ou plus d'étages avec un ou plusieurs récipients d'accumulation (17 ; 29, 30).

9. Entraînement selon l'une quelconque des revendications précédentes, **caractérisé par** un dispositif de commande ou de réglage (19, 21, 31, 32) pour commander ou régler le remplissage et le vidage de l'accumulateur de gaz comprimé (18).

10. Entraînement selon l'une quelconque des revendications précédentes, **caractérisé par** des moyens (27, 35) pour lier directement la machine d'expansion (23) à l'espace de combustion du moteur à combustion interne (2) sous dérivation de l'accumulateur de gaz comprimé (18).

11. Procédé de maniement d'un entraînement de véhicule, en particulier d'un entraînement de véhicule automobile, comprenant un moteur à combustion interne (2), un accumulateur de gaz comprimé (18) qui peut être raccordé au moins à un espace de combustion du moteur à combustion interne (2) ainsi qu'à une machine d'expansion séparée (23), dans lequel un gaz comprimé dans l'espace de combustion du moteur à combustion interne (2) est détendu en effectuant un travail dans la machine d'expansion (23), **caractérisé en ce qu'**au moins une partie du gaz est acheminée de la machine d'expansion (23) dans l'espace de combustion ou dans un conduit d'admission (10) du moteur à combustion interne (2), dans lequel un canal de décharge supplémentaire (9) de chaque cylindre (4) n'est pas relié à un conduit d'échappement (14) du moteur à combustion interne (2), mais via un collecteur (16) et une soupape à trois voies (35), au choix, à un récipient d'accumulation (17) d'un accumulateur de gaz comprimé (18) ou directement à une admission (22) de la machine d'expansion (23).

12. Procédé selon la revendication 11, **caractérisé en ce que** le gaz comprimé de l'espace de combustion ou de l'accumulateur de gaz comprimé (18) est chauffé avant l'entrée dans la machine d'expansion (23).
